(19) **Europäisches Patentamt**
**European Patent Office**
**Office européen des brevets**

(11) **EP 1 870 993 A1**

(12) **EUROPEAN PATENT APPLICATION**

(43) Date of publication:
26.12.2007 Bulletin 2007/52

(51) Int Cl.:
**H02M 5/40** (2006.01)

(21) Application number: **06115873.9**

(22) Date of filing: **22.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Alstom Technology Ltd**
**5400 Baden (CH)**

(72) Inventors:
• **Benaboud, Aziza**
**1020, Renens (CH)**
• **Rufer, Alfred-Christophe**
**1168, Villars-sous-Yens (CH)**

(54) **Method of controlling a three level converter**

(57) Proposed is a method for controlling an inverter (5) converting direct input voltage ($U_{dc}$) into alternating inverter voltage ($V_{inv}$) with a basic frequency ($\omega$) for providing it to a load (9) for a transition in which a change in active power (P) and/or reactive power (Q) within a transition time ($T_{tr}$) is carried out. The method is characterised in that, for avoiding DC offsets the transition time $T_{tr}$ is chosen such that in an equation which is a function of the fundamental period of the basic frequency and the target phase angle after the transition between the inverter voltage $V_{inv}$ and the load voltage $V_n$, a variable k is a small integer number between 1-8.

Fig. 2

EP 1 870 993 A1

**Description**

TECHNICAL FIELD

The present invention relates to a method for controlling an inverter converting direct input voltage into alternating inverter voltage with a basic frequency for providing it to a load. It specifically relates to the use of such a method within a frequency converter also comprising a corresponding rectifier, both of which preferably operated in square wave modulation mode.

BACKGROUND OF THE INVENTION

Variable-speed generators or, generally speaking, generators having a frequency that diverges from the grid frequency are typically connected to the electrical power grid by means of converters that adapt the voltage and the frequency being generated by the generator to the voltage and the frequency of the electrical power grid. Various devices are used as converters for this purpose such as, for instance, so-called direct converters, with which the two different voltages and frequencies are adjusted relative to each other, for example, using semiconductor switches (e.g. thyristors or gate turn-off thyristors - GTOs) in a direct conversion (AC/AC). Such direct converters exist, for instance, as so-called cyclo-converters or as so-called matrix converters (described, for example, in US 5,594,636). In the case of a natural commutation, they generate frequency components of a low-frequency that are undesired and difficult to eliminate, while in the case of forced commutation, they entail large switching losses.
As an alternative, it is possible to ensure a voltage-adapted and frequency-adapted connection of a generator to an electrical power grid in the form of an indirect conversion. With such a conversion, first of all, a rectifier produces a direct current from the alternating current generated by the generator and, in an inverter, this direct current is subsequently matched to the voltage and frequency of the electrical power grid. Such controlled converters likewise make use of semiconductor switches (for instance, GTOs, insulated gate bipolar transistors - IGBTs, metal oxide semiconductor field-effect transistors - MOSFETs, or integrated gate commutated thyristors - IGCTs) and they entail large switching losses at the switching frequencies typically employed.
Such a system and a mode of its operation is e.g. described in DE 103 30 473 A1. In this document, a method and a device for adapting the alternating current generated by a generator and the alternating voltage generated by a generator to a grid is proposed. The generator has at least one excitation coil and the power fed into the grid can be flexibly adapted while entailing low switching losses in that a static frequency converter is employed for the adaptation between the generator and the grid, and in that, in order to control the power fed into the grid, means are provided with which, on the one hand, the strength of the excitation field generated by the at least one excitation coil is regulated and, on the other hand, the phase angle between the frequency converter voltage and the generator or grid voltage is appropriately controlled.

SUMMARY OF THE INVENTION

One of the objects of the present invention is therefore to provide an improved method of operation not only for a full static frequency converter but also just for the inverter part of a frequency converter.
Specifically, a method for controlling an inverter converting direct input voltage $U_{dc}$ into alternating inverter voltage $V_{inv}$ with a basic frequency $\omega$ for providing it to a load is proposed. Specifically, a method is proposed for transitions in which a change in active power $P$ and/or reactive power Q within a transition time $T_{tr}$ is to be implemented.
Surprisingly it was found that fast ramping control without the drawback of DC offsets is unexpectedly possible. As a matter of fact, it was found by clever reduction of the circuit for simulation, that very fast transitions compared to the output frequency are possible if the transition time $T_{tr}$ is chosen specifically, namely such that in the equation

$$T_{tr} = kT_f - \frac{\theta_{nc}}{\omega}$$

k is small integer number below 10, more specifically an integer number between 1-8 (so k = 1, 2, 3, 4, 5, 6, 7, or 8), wherein $T_f$ is the fundamental period and is defined as

$$T_f = \frac{2\pi}{\omega}$$

and wherein $\theta_{nc}$ is the target phase angle after the transition between the inverter voltage $V_{inv}$ and the load voltage $V_n$.

One of the key features of the invention is therefore the finding that specifically for small integer values of k unexpectedly there is no or substantially no DC-offsets in the mean line current.

It should be noted that essentially the same result can be obtained if k is chosen to be very close to such an integer value, and for example a deviation of k less than or equal to 0.05 from these integer values will lead to some DC offset but only of minor importance.

In a first preferred embodiment of the present invention, k is chosen to be a very small integer number between 1-5 or preferably even 1 or 2. If the value of k is chosen in this manner, extremely short and previously unknown transition times are possible without any drawbacks in terms of DC offsets in the line current.

Preferably, the inverter is operated in basic frequency clocking. It is preferred, that the inverter is designed as a three level inverter, preferably a neutral point clamped inverter.

The specific advantages of the above choice of the transition time are particularly pronounced if the inverter is operated in square wave modulation.

As already outlined above, the main application of the method is to be seen in the field of frequency converters. More specifically, application of the present method is particularly useful in the context of the above-mentioned state-of-the-art, so in the context of the design according to DE 103 30 473 A1. As pertains to the details of the static frequency converter and its mode of operation, the disclosure of DE 103 30 473 A1 is correspondingly fully incorporated into this disclosure. As a matter of fact, the above disclosed method for operation of the inverter is in particular an improvement of the control of the inverter part as disclosed in DE 103 30 473 A1.

So according to a preferred embodiment, the method is applied to an inverter which is together with or in combination with or in connection with a rectifier to form a static frequency converter. Preferably this static frequency converter is a three level converter, even more preferably a neutral point clamped converter.

In the latter case, according to a preferred embodiment, both, the rectifier as well as the inverter are operated in square wave modulation (SWM).

As already specifically outlined in DE 103 30 473 A1 the output amplitude of the frequency converter is preferentially controlled by means of the amplitude of the input of the rectifier and/or by means of the de-phasing between the load and the inverter voltage.

Correspondingly, the above method is preferably used for the conversion of alternating current generated by a (fast running) synchronous generator, preferably driven by a gas turbine, into alternating current to be provided to a grid or network. It may however also be used for a static compensator for reactive power or for analogous applications.

Further embodiments of the present invention are outlined in the dependent claims.

SHORT DESCRIPTION OF THE FIGURES

In the accompanying drawings preferred embodiments of the invention are shown in which:

Figure 1      shows a schematic diagram of the final application using a three level converter;

Figure 2      shows a schematic diagram of the dedicated control strategy of the inverter part only;

Figure 3      shows a diagram of voltage and current line side for the three situations A (a), B (b) and C (c);

Figure 4      shows the network side references for the three situations and the transitions therebetween, wherein a) shows the active power and the reactive power references, b) shows the angle shift reference, and c) shows the DC voltage reference;

Figure 5      a) shows a simplified circuit for the calculations, and b) the corresponding vector diagram;

Figure 6      shows a transition time limiter;

Figure 7      shows the simulation results, wherein a) shows the active and reactive power, and b) shows the network and inverter voltage and line current as a function of time;

Figure 8    shows the first transition from A to B for k = 0.25, wherein a) shows the angle shift and b) shows the current;

Figure 9    shows the second transition from B to C for k= 0.25, wherein a) shows the angle shift and b) shows the current;

Figure 10    shows the first transition from A to B for k = 0.5, wherein a) shows the angle shift and b) shows the current;

Figure 11    shows the second transition from B to C for k= 0.5, wherein a) shows the angle shift and b) shows the current;

Figure 12    shows the first transition from A to B for k = 1.0, wherein a) shows the angle shift and b) shows the current;

Figure 13    shows the second transition from B to C for k= 1.0, wherein a) shows the angle shift and b) shows the current;

Figure 14    shows the first transition from A to B for k = 1.5, wherein a) shows the angle shift and b) shows the current;

Figure 15    shows the second transition from B to C for k= 1.5, wherein a) shows the angle shift and b) shows the current;

Figure 16    shows the first transition from A to B for k = 2.0, wherein a) shows the angle shift and b) shows the current;

Figure 17    shows the second transition from B to C for k= 2.0, wherein a) shows the angle shift and b) shows the current;

Figure 18    shows the first transition from A to B for k = 10.3, wherein a) shows the angle shift and b) shows the current; and

Figure 19    shows the second transition from B to C for k= 10.3, wherein a) shows the angle shift and b) shows the current.

DETAILED DESCRIPTION OF THE PREFERRED EMBODIMENTS

Referring to the drawings, which are for the purpose of illustrating the present preferred embodiments of the invention and not for the purpose of limiting the same, the present invention with a fast-ramping DC elimination strategy for AC currents shall be detailed in as follows:

1 Introduction

The present application describes a new control strategy preferably for a three level converter with Neutral Point Clamped (NPC) topology, characterized by its high efficiency due to the use of square wave modulation or SWM. The main advantage of this mode is the quasi absence of switching losses. The produced active and reactive power can be controlled by voltage magnitude adaptation in the input of the inverter (DC side), together with the de-phasing between the grid and output inverter voltages. The context of the use of this control is given by a special frequency converter, where the ratio between input and output voltage is kept constant, by using a square wave operation mode at both the input and the output sides, as it is described in DE 103 30 473 A1, which document has already been mentioned above.

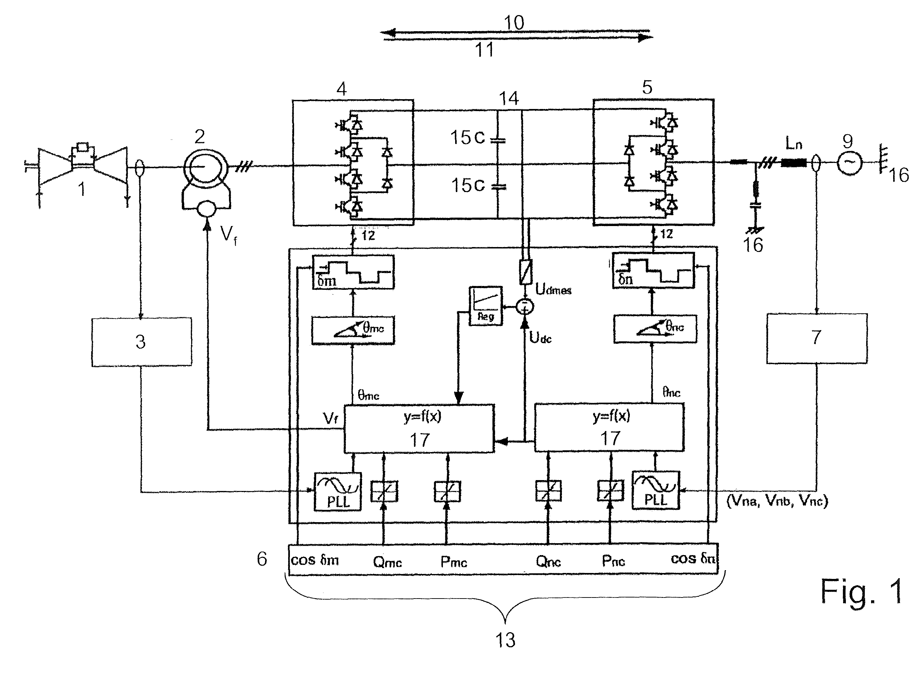

Figure 1 illustrates the final application of the frequency converter 13, as an interface between a fast running synchronous generator 2, driven by a gas turbine 1 and the grid or network 9. In this application, the converter 13 can be designated as a "frequency only converter", due to the fixed ratio between the input and output voltage magnitude. Voltage adaptation, used for the power flow control through the network, can be achieved by changing the generator's excitation.

In Figure 1 the static frequency converter is given by a rectifier 4 and an inverter 5, which are joined via a DC link 14. In this link capacitors 15 are provided. The control section is provided with the position information from the gas turbine as provided by the position encoder 3, and the main references 6 are indicated on the bottom. Depending on the desired output amplitude, in the calculation units 17 the necessary current/voltage for feeding the excitation system of the synchronous generator 2 is calculated and input to the generator. The actual output conditions of the system are provided to the control by a voltage transducer 7. Furthermore it is possible to provide a filter 8 on the output side of the inverter.

On top of Figure 1 it is indicated schematically that such a system can be operated for starting up the gas turbine (arrow 10, start-up direction) or it can be operated for the production of energy (arrow 11, energy production direction).

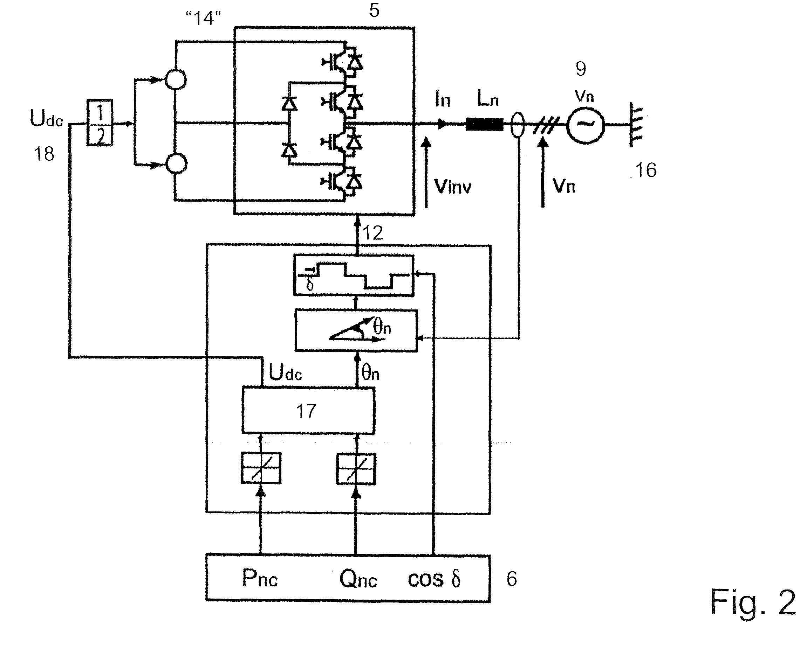

In this application, only the line side control is of main concern. As a simplification, the synchronous generator 2 and its rectifier 4 will be replaced by an adjustable DC voltage source 18 at the input of the inverter 5 (see Figure 2).

Simulation results with different operating points and transitions between them shall highlight the capabilities of the proposed control strategy. These include the ability to operate with unity power factor and better current quality. For this point many authors emphasize on low total harmonic distortion or high efficiency, however there are only few concerning the DC component reduction.

The aim of the present application is to describe a new fast-ramping DC elimination strategy for AC currents.

This specification part of the present application is organized as follows. Section 2 presents the dedicated control strategy including dynamic regime, Section 3 describes a new method to eliminate DC component and Section 4 shows simulation result. Finally Section 5 concludes the specification part of the present application.

2 Dedicated control strategy

Figure 2 shows a principle circuit diagram of a three level NPC inverter, and illustrates its control block.

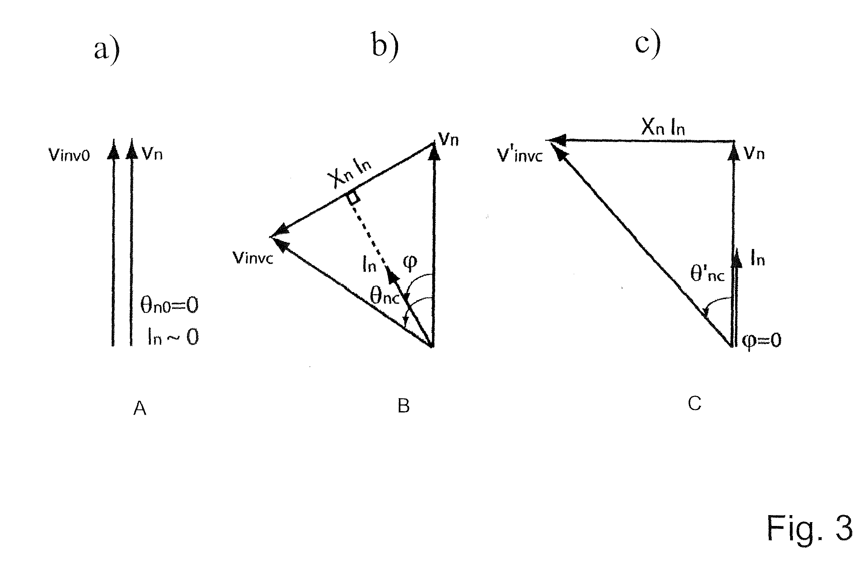

This control is based on angular shift between the network and the output inverter voltages, together with voltage magnitude adaptation in the input of the inverter. Three operation modes A, B, and C can be obtained that are presented in vector diagrams in Figures 3 a), b) and c), respectively. Figure 3a) shows the situation for no load, so $P_{nc}=Q_{nc}=O$. Figure 3b) shows injection of active and reactive power, and Figure 3 c) shows injection of active power only.

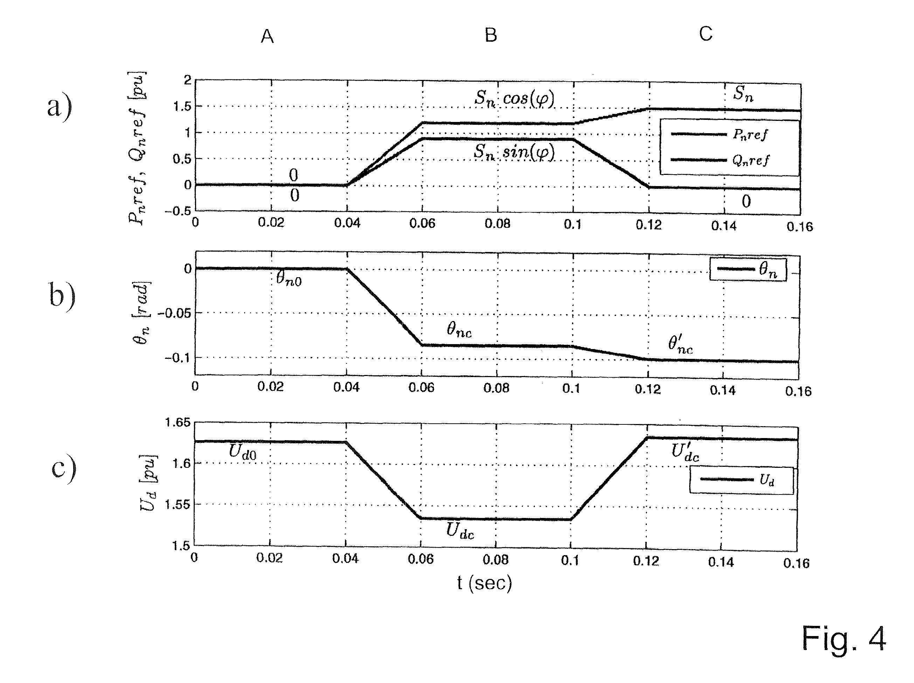

Figure 4 shows the network side references, wherein a) shows active and reactive power references, wherein the upper line shows the active power reference P and the lower line gives the reactive power reference Q, b) shows the angle shift reference, and c) shows DC voltage reference.

Starting from the active and reactive power references, the system runs initially in no load operation (operation mode A), with active and reactive power equal to zero (Figure 4a). Both inverter and network voltages have the same phase with amplitude equal to nominal (Equation 1). Therefore the current line is very small (Figure 3-a, mode A).

$$\begin{cases} \theta_{n0} = 0 \\ \\ U_{d0} = \dfrac{\pi}{2\cos\delta} V_n \end{cases} \tag{1}$$

In the first transition at t=0.04s between modes A and B, network active and reactive power are ramped to $P_{nc} = S_n \times \cos\varphi$ and to $Q_{nc} = S_n \times \sin\varphi$ respectively. Consequently the angle shift and the continuous voltage change from $(\theta_{n0}, U_{d0})$ to $(\theta_{nc}, U_{dc})$ in mode B (Figure 3 b and Figures 4 b and c). Their values depend on the active and reactive power references (Equation 2).

$$\begin{cases} \theta_n = \arctan\left( \dfrac{P_{nc}}{\dfrac{3}{2}\dfrac{V_n^2}{X_n} - Q_{nc}} \right) \\ \\ U_d = \dfrac{\pi}{2\cos\delta}\sqrt{(V_n - \dfrac{2}{3}\dfrac{X_n}{V_n}Q_{nc})^2 + (\dfrac{2}{3}\dfrac{X_n}{V_n}P_{nc})^2} \end{cases} \tag{2}$$

In the second transition att=0.1s between B and C, the reactive power Q ramps down to zero as illustrated in Figure 4a). Consequently the angle shift and the continuous voltage must change from $(\theta_{nc}, U_{dc})$ to $(\theta'_{nc}, U'_{dc})$. Then the reactive power Q can be compensated and the system can be operated using a unity power factor.

However the line current can contain some DC component due to the transients.

To overcome this problem, the transition of active and reactive power references should not be rapid. If the transition time $T_{tr}$, is relatively long compared to the fundamental period ($T_f$ = 20ms), the current may be considered as symmetrical, and the DC component can be neglected.

The question now is as follows: How fast is the slew rate of the current transient allowed to be in Square Wave Modulation?

3 Fast-ramping DC elimination strategy for AC currents

A study by using a simple circuit proves that for a particular choice of $T_{tr}$ the DC component can be equal zero.

3.1 Simple system

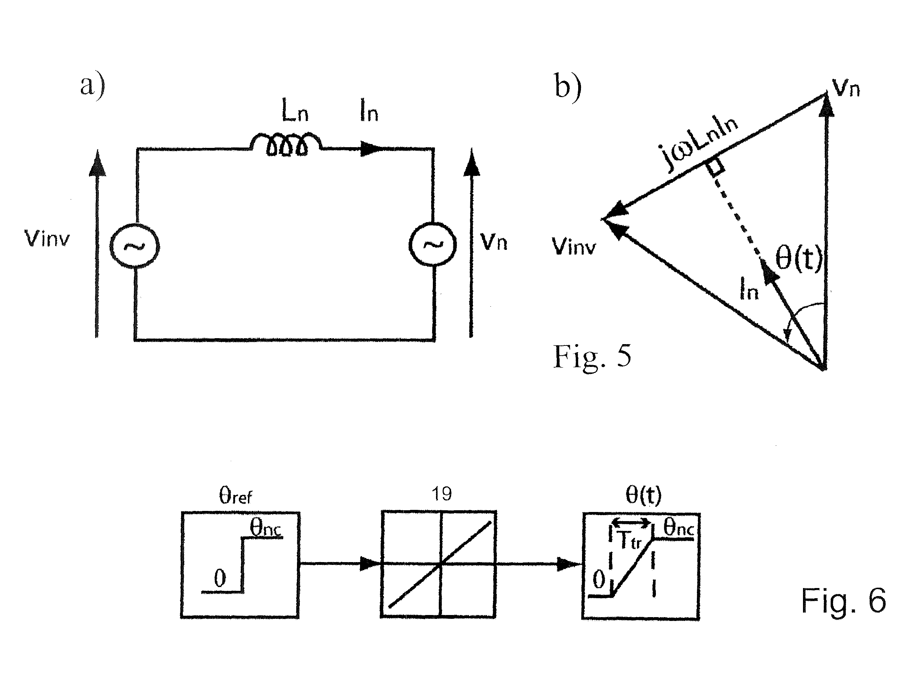

As an example a simple circuit (see Figure 5 a, the corresponding vector diagram is given in figure 5 b) shall be considered, in which:

the output voltage is: $V_n(t) = sin\omega t$
the input voltage is: $V_{inv}(t) = sin(\omega t + \theta(t))$
$\theta(t)$ represents the angle shift between $V_n$ and $V_{inv}$ and this is shown in Figure 6 (transition time limiter) and it is given by Equation 3:

$$
\begin{cases}
\theta(t) = \dfrac{\theta_{nc}}{T_{tr}}t & \text{if} \quad t < T_{tr} \\
\theta(t) = \theta_{nc} & \text{if} \quad t \geq T_{tr}
\end{cases}
\tag{3}
$$

The input and the output voltages are connected together through an inductance $L_n$.
It is known that the current generated in the circuit is given by Equation 4:

$$
i_n(t) = \frac{1}{L_n} \int_0^t (V_{inv}(t) - V_n(t))dt
\tag{4}
$$

(3) can then be inserted into (4) to yield:

$$
i_n(t) = \frac{1}{L_n\omega}\left(\frac{\theta_{nc}}{\omega T_{tr} + \theta_{nc}}\right)(cos(\omega T_{tr} + \theta_{nc}) - 1)
$$
$$
+ \frac{1}{L_n\omega}(cos\omega t - cos(\omega t + \theta_{nc}))
\tag{5}
$$

On the other hand, the mean value of the current is given by (6):

$$
i_{mean} = \frac{1}{T_f} \int_0^{T_f} i_n(t)dt
\tag{6}
$$

Substituting the current given by (5) into (6), we obtain:

$$
i_{mean} = \frac{1}{L_n\omega}\left(\frac{\theta_{nc}}{\omega T_{tr} + \theta_{nc}}\right)(cos(\omega T_{tr} + \theta_{nc}) - 1)
\tag{7}
$$

The current's mean value $i_{mean}$ or DC component is composed by two terms and it depends on the transition time $T_{tr}$. The DC component will be equal to zero when one of these terms is zero:

$$\frac{1}{L_n \omega}\left(\frac{\theta_{nc}}{\omega T_{tr} + \theta_{nc}}\right) = 0 \qquad (8)$$

Equation 8 will be verified if $T_{tr}$ is relatively long.

$$\left(cos(\omega T_{tr} + \theta_{nc}) - 1\right) = 0 \qquad (9)$$

Equation 9 will be verified when $T_{tr}$ is equal to an integer multiple of the fundamental period. $T_{tr}$, in fact is given by Equation 10:

$$T_{tr} = kT_f - \frac{\theta_{nc}}{\omega} \qquad (10)$$

with

$$T_f = \frac{2\pi}{\omega}$$

and k=1 ,2,3...

Remark: The analytical calculation is done for fixed input voltage and for the linear ramp, however the system depicted in Figure 2 is not linear.

3.2 Non linear system

Figure 2 illustrates a control block for a three level inverter. As presented in Section 2, the angle shift between the network 9 and the output inverter voltages, together with DC voltage magnitude in the input of the inverter, are given by Equations 11.

$$\begin{cases} \theta_n(t) = \arctan\left(\dfrac{P(t)}{\dfrac{3}{2}\dfrac{V_n^2}{X_n} - Q(t)}\right) \\ \\ U_d(t) = \dfrac{\pi}{2\cos\delta}\sqrt{\left(V_n - \dfrac{2}{3}\dfrac{X_n}{V_n}Q(t)\right)^2 + \left(\dfrac{2}{3}\dfrac{X_n}{V_n}P(t)\right)^2} \end{cases} \qquad (11)$$

$P(t)$ and $Q(t)$ are given by Equations 12:

7

$$\begin{cases} P(t) = \dfrac{|P_{nc} - P_{n0}|}{T_{tr}} t \\[3mm] Q(t) = \dfrac{|Q_{nc} - Q_{n0}|}{T_{tr}} t \end{cases} \qquad (12)$$

Then $\theta_n$ and $U_d$ are not linear.

4 Simulation results

The system depicted in Figure 2 has been simulated using the following characteristics: $V_n$ = 1 pu is the network voltage. $X_n$ = 0.1 pu: inductance between inverter and network. $S_n$ = 1.5 pu is the apparent power.

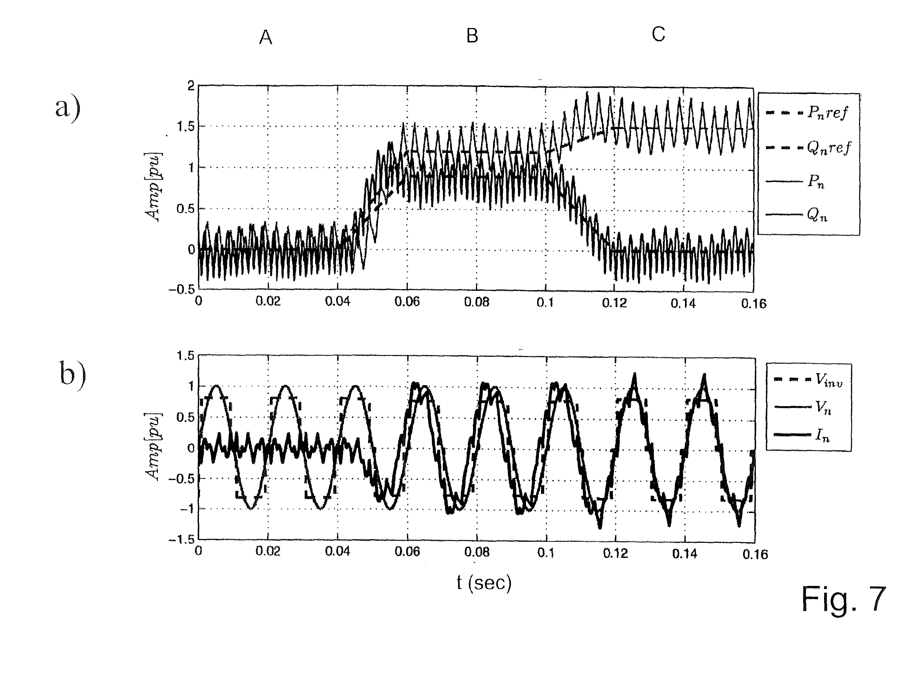

Figure 7 shows the simulated active P and reactive Q power for three operation modes A, B and C. The line current is in phase with the network voltage when the reactive power Q is zero.

Under the same condition and using the same characteristics, the system has been simulated for different values of transition period $T_{tr}$.

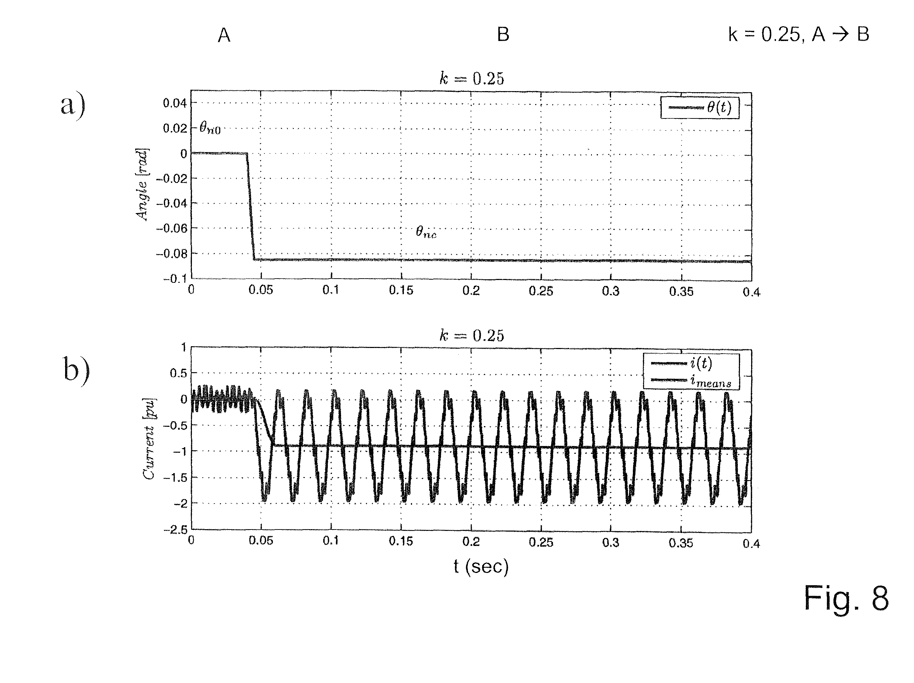

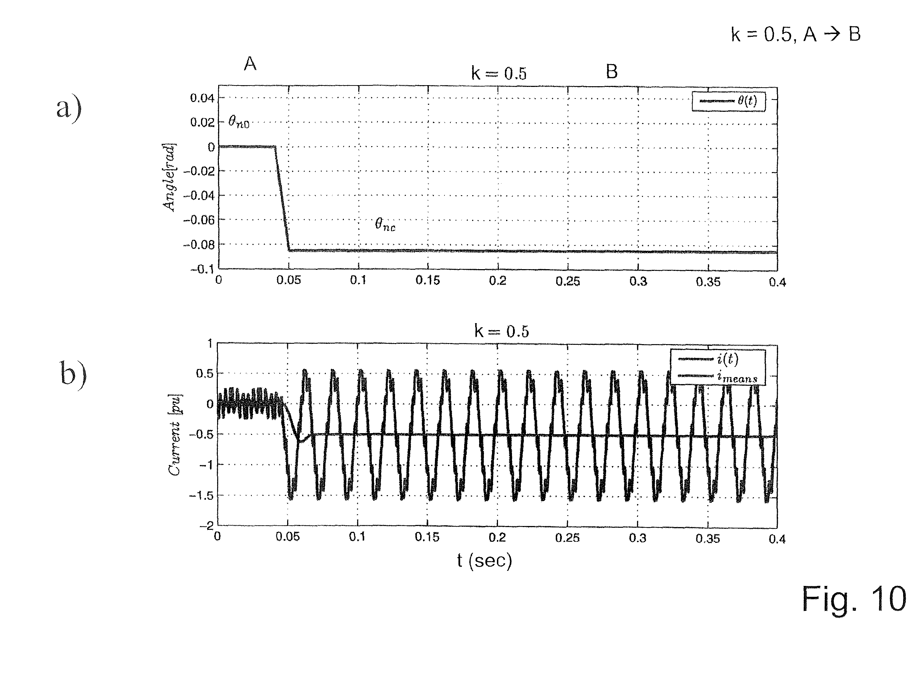

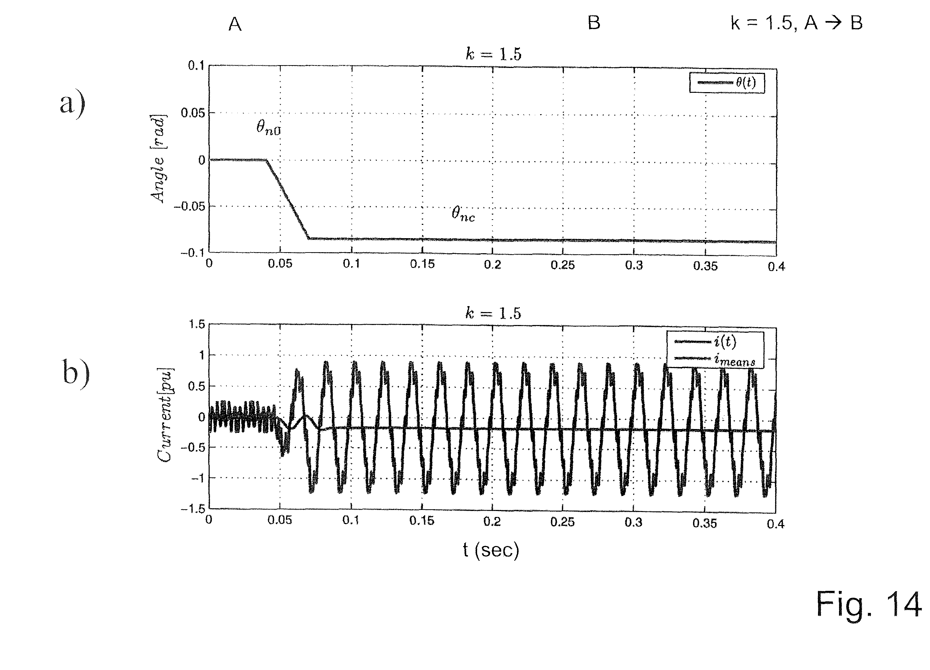

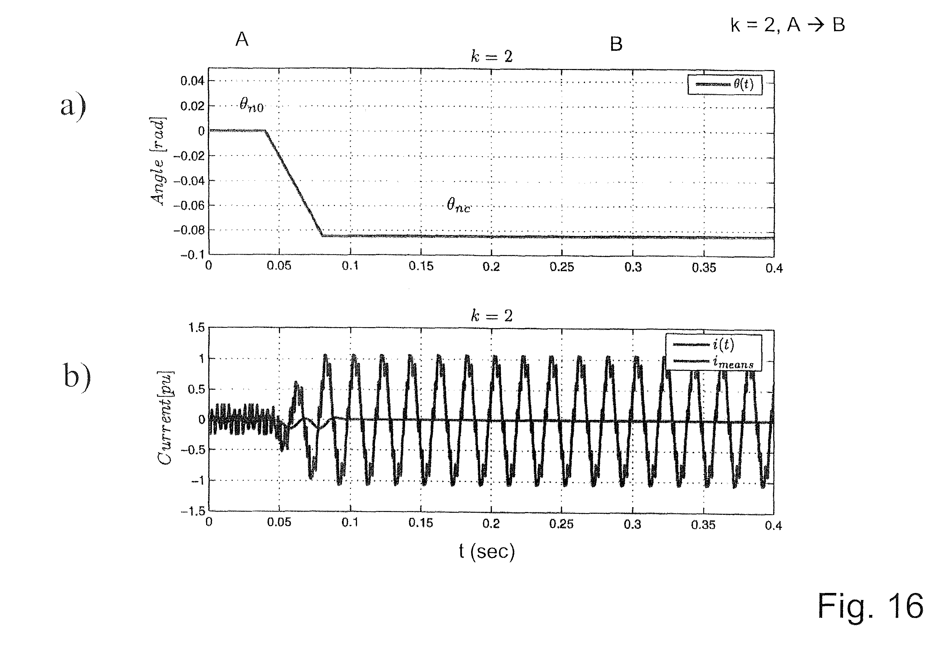

The line current is measured in the first transition at t=0.04 s, when $\theta(t)$ changes from $\theta_{n0}$ to $\theta_{nc}$, the system operates with $cos\varphi \neq$ 1, Figures 8, 10, 12, 14, 16 and 18.

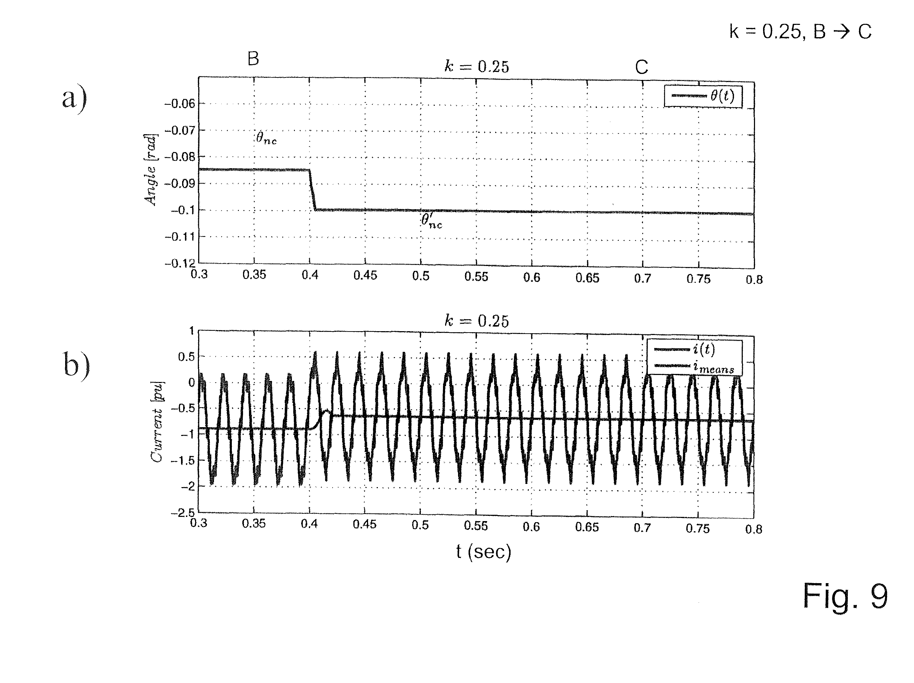

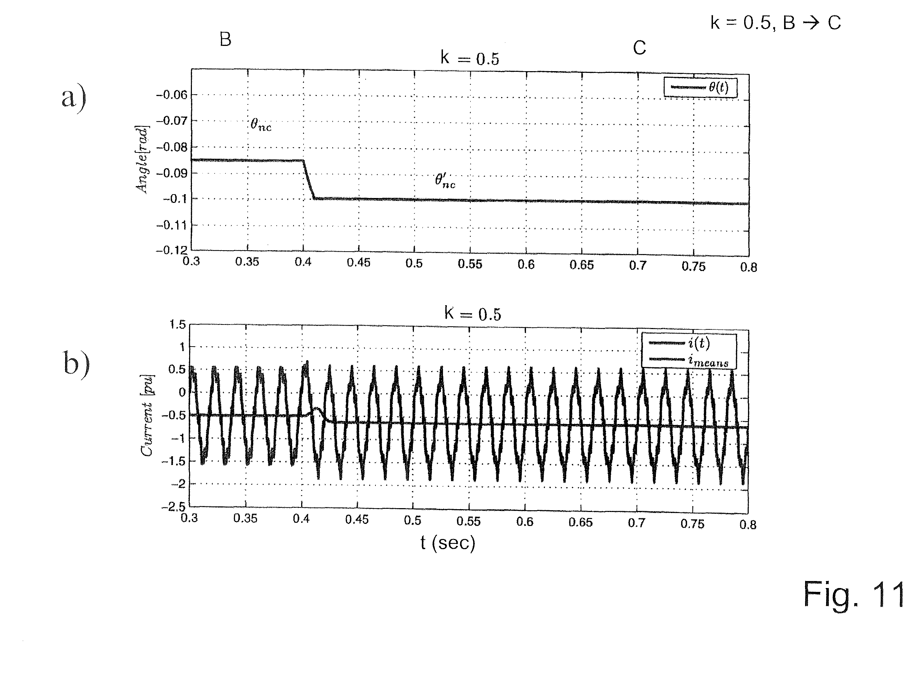

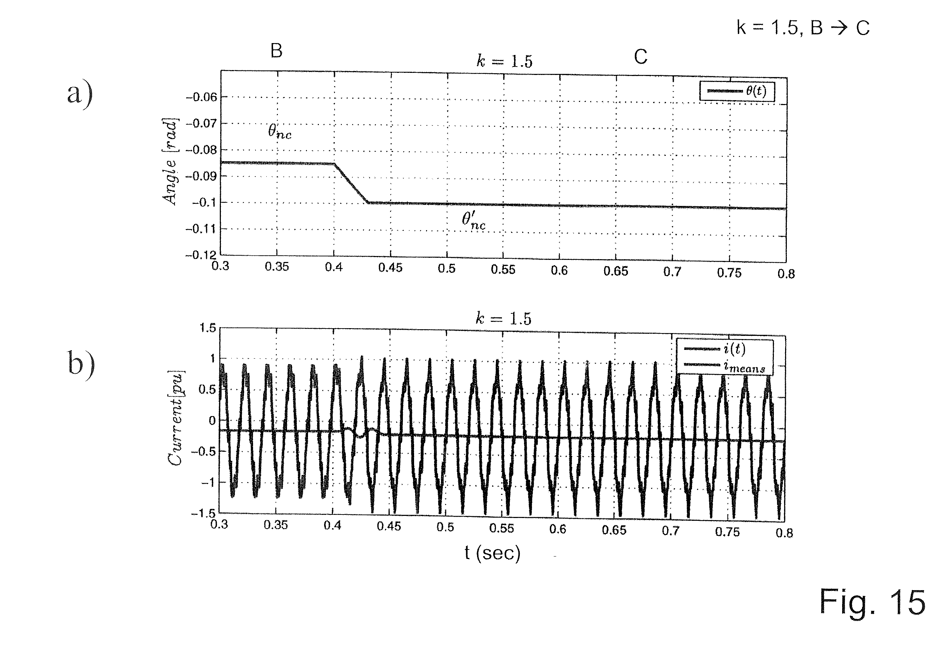

Also it is measured in the second transition at t=0.4 s, when $\theta(t)$ changes from $\theta nc$ to $\theta'_{nc}$ and the system operates with $cos\varphi$ = 1, Figures 9, 11, 13, 15, 17 and 19.

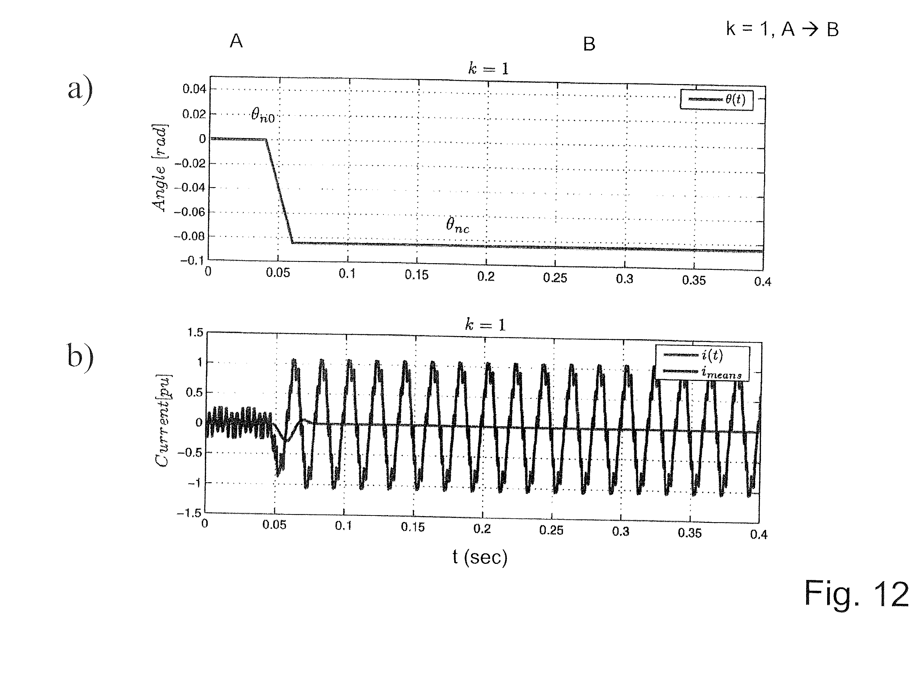

The simulation results in Figures 12, 13, 16 and 17 confirm that the DC component is zero when k is an integer, e.g. k = 1,2,.... Otherwise, it is different from zero, e.g. k= 0.25, 0.5, 1.5, Figures 8, 9, 10, 11, 14, 15.

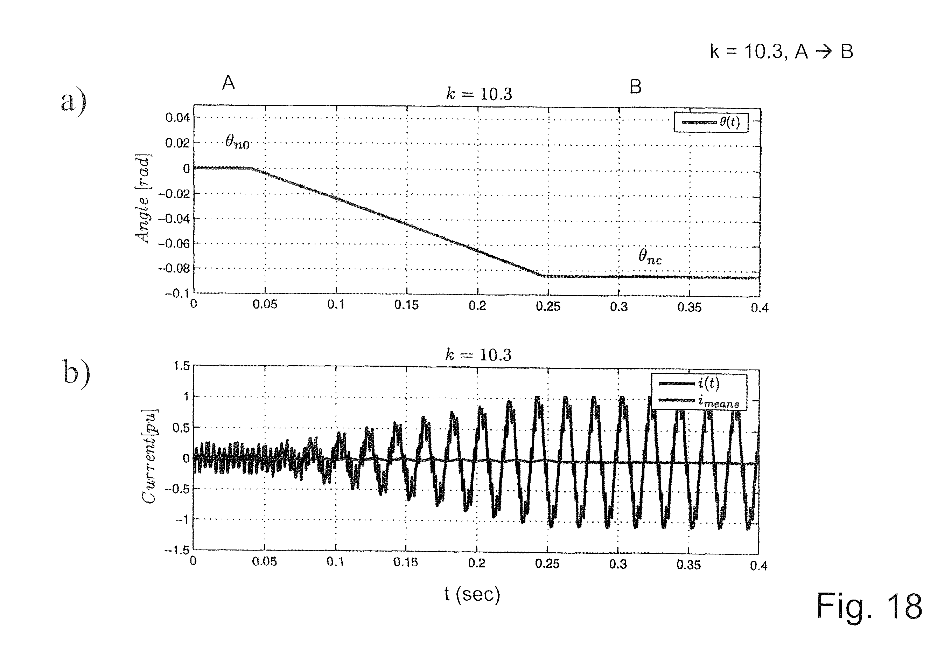

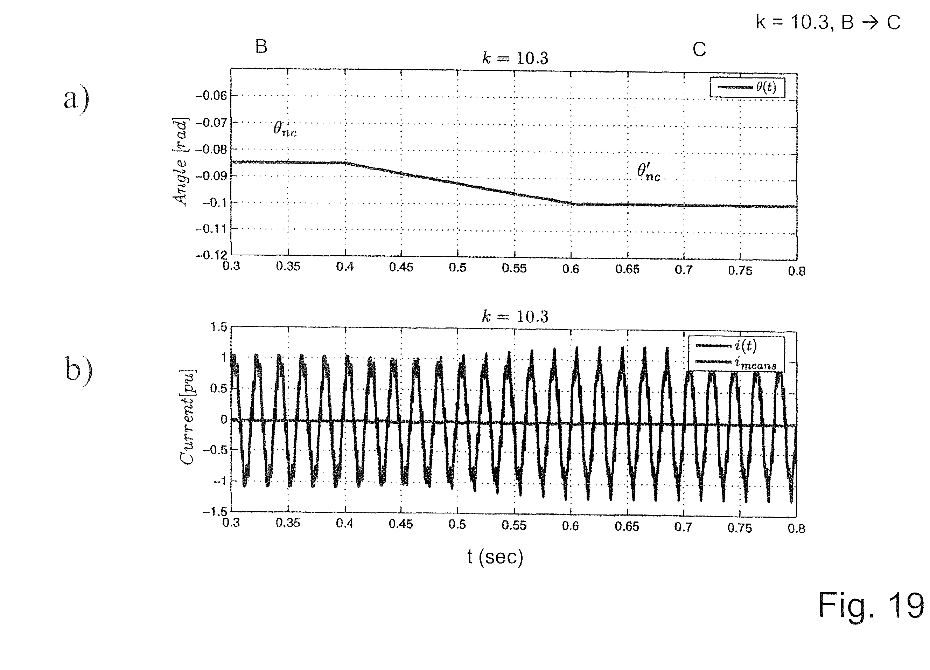

For large values of k, e.g. k=10.3, Figures 18, 19, the DC component can be neglected.

5 Conclusion

A new control strategy for a three level NPC inverter is presented. The converter can reach any operating point through an angular shift and an adaptation of the continuous voltage. Its main advantage is a simple structure. It is used typically as an interface between a fast running synchronous generator and the grid, where the ratio between input and output voltage is kept constant, by using a SWM at both the generator and the line side. In the final application, voltage adaptation can be achieved through the generator's excitation. In this application, only the line side control strategy is presented. Simulation results with different operating points and transitions between them highlight the capabilities of the proposed control strategy. These include the ability to operate with unity power factor and better current quality without continuous component.

In comparison to the usually slow transient that characterizes a DC component free current transient as shown in Figure 18 and 19, it is verified that much faster transients also without DC component can be achieved, simply by choosing a defined transition period equal to an integer multiple of the fundamental period.

The solution presented here solves the problem discussed and can be applied to other applications such as a static compensator for reactive power.

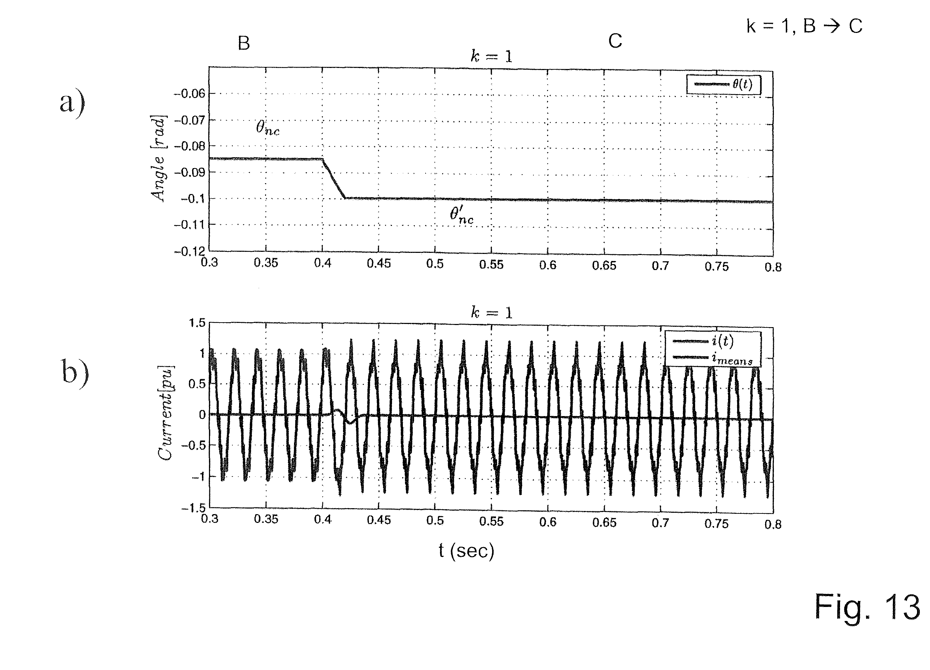

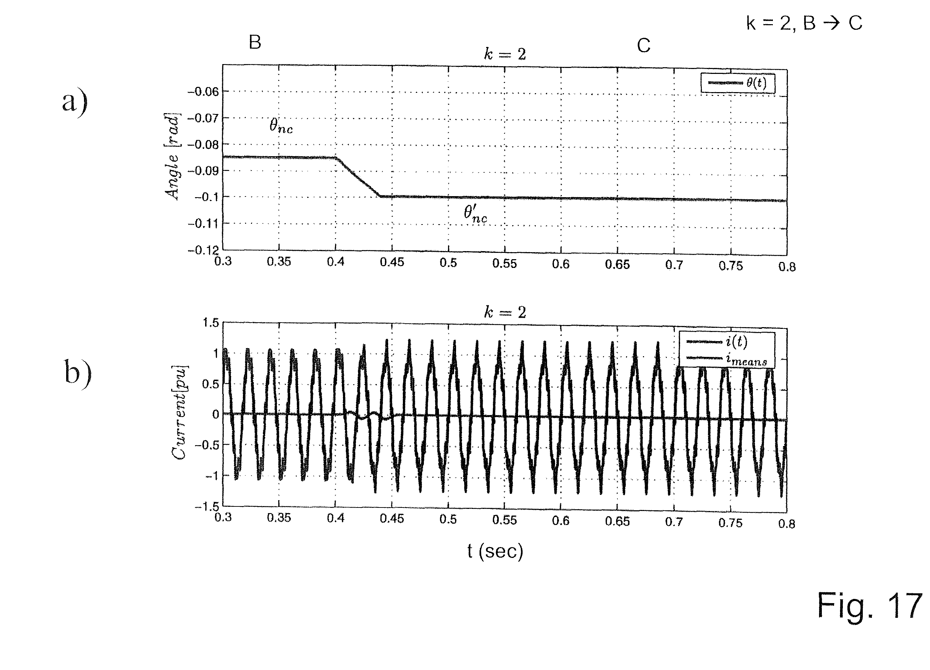

As shown in Figures 13 and 17 the reactive power can be compensated rapidly and without DC component in the line current.

LIST OF REFERENCE NUMERALS

1    gas turbine

2    synchronous generator

3    position encoder

4    rectifier, a pulse converter, a rectifier stage of the frequency converter

5      inverter, pulse converter, inverter stage of the frequency converter

6      references

7      voltage transducer

8      filter

9      network, grid, load

10     start-up direction

11     energy production direction

12     control lines to rectifier and inverter, gates

13     three level converter

14     DC link, direct current stage of the converter

15     capacitor, capacitance between levels of direct current stage of the converter

16     ground

17     calculation unit

18     DC voltage source, voltage magnitude adaptation of the input of the inverter

19     rate

P        active power

Q        reactive power

$U_{d0}$      continuous nominal voltage amplitude at no-load

$P_{nc}$      network active power

$Q_{nc}$      network reactive power

$\theta_{n0}$      phase angle at no-load

$V_n$      network voltage

$V_{inv}$      inverter voltage

$I_n$      network current

$\theta_{nc}$      phase angle under active and reactive power

$U_{dc}$      voltage amplitude under active and reactive power

$\theta'_{nc}$      phase angle under reactive power

$U'_{dc}$      voltage amplitude under reactive power

$T_{tr}$      transition time

$L_n$       inductance

$\theta(t)$      phase angle shift between $V_n$ and $V_{inv}$

$T_f$       fundamental period

PLL      phase locked loop

A,B,C    operation modes

**Claims**

1. Method for controlling an inverter (5) converting direct input voltage ($U_{dc}$) into alternating inverter voltage $(V_{inv})$ with a basic frequency $(\omega)$ for providing it to a load (9) for a transition in which a change in active power (P) and/or reactive power (Q) within a transition time $(T_{tr})$ is carried out,
wherein
the transition time $T_{tr}$ is chosen such that in the equation

$$T_{tr} = kT_f - \frac{\theta_{nc}}{\omega} \tag{10}$$

k is an integer number between 1-8, wherein $T_f$ is the fundamental period and is defined as

$$T_f = \frac{2\pi}{\omega}$$

and wherein $\theta_{nc}$ is the target phase angle after the transition between the inverter voltage $V_{inv}$ and the load voltage $V_n$.

2. Method according to claim 1, wherein k is chosen to be an integer number between 1 and 5.

3. Method according to claim 1, wherein k is chosen to be 1 or 2.

4. Method according to any of the preceding claims, wherein the inverter (5) is operated in basic frequency clocking.

5. Method according to any of the preceding claims, wherein the inverter (5) is a multilevel inverter, preferably a two, three, four, five or more level inverter.

6. Method according to any of the preceding claims, wherein the inverter (5) is operated in square wave modulation.

7. Method according to any of the preceding claims, wherein the inverter (5) is operated together with a rectifier (4) to form a converter (13), preferably a multilevel converter, even more preferably a two, three, four, five or more level converter .

8. Method according to claim 7, wherein the inverter (5) as well as the rectifier (4) are connected together as a frequency converter, and are both operated in square wave modulation.

9. Method according to any of claims 7 or 8, wherein the converter (13) is a frequency converter and wherein the output amplitude of the frequency converter (13) is controlled by means of the amplitude of the input of the rectifier (4) and/or by means of the de-phasing between the voltage of the load $(V_n)$ and the inverter voltage $(V_{inv})$.

10. Use of the method according to any of the preceding claims for the conversion of alternating current generated by a synchronous generator (5), preferably driven by a gas turbine, into alternating current to provided to a grid (9).

**11.** Use of the method according to any of claims 1-9 for a static compensator for reactive power.

Fig. 1

Fig. 2

a)

b)

c)

$V_{inv0}$  $V_n$

$\theta_{n0}=0$

$I_n \sim 0$

A

$X_n I_n$

$V_n$

$V_{invc}$

$I_n$  $\varphi$

$\theta_{nc}$

B

$X_n I_n$

$V'_{invc}$  $V_n$

$\theta'_{nc}$  $I_n$

$\varphi=0$

C

Fig. 3

Fig. 4

EP 1 870 993 A1

EP 1 870 993 A1

a)

b)

Fig. 5

Fig. 6

a)

b)

Fig. 7

EP 1 870 993 A1

Fig. 8

Fig. 9

k = 0.5, A → B

a)

b)

Fig. 10

a)

B

C

k = 0.5

b)

Fig. 11

EP 1 870 993 A1

A                                                    B

a)

$k = 1$

b)

t (sec)

Fig. 12

EP 1 870 993 A1

k = 1, B → C

a)

b)

Fig. 13

Fig. 14

a)

b)

Fig. 15

EP 1 870 993 A1

Fig. 16

Fig. 17

Fig. 18

k = 10.3, B → C

a)

b)

t (sec)

Fig. 19

European Patent
Office

EUROPEAN SEARCH REPORT

Application Number

EP 06 11 5873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 220 638 A2 (MITSUBISHI ELECTRIC CORP [JP]) 6 May 1987 (1987-05-06) <br> * abstract * <br> * column 3, lines 32-44 * <br> * figures * <br> ----- | 1-10 | INV. <br> H02M5/40 |
| A | DAKYO B ET AL: "END USE THREE LEVELS VSI FOR A SINGLE-PHASE PHOTOVOLTAIC GRID CONNECTED APPLICATION" <br> EPE 2001. 9TH. EUROPEAN CONFERENCE ON POWER ELECTRONICS AND APPLICATIONS. (CD-ROM VERSION). GRAZ, AUG. 27 - 29, 2001, EPE . EUROPEAN CONFERENCE ON POWER ELECTRONICS AND APPLICATIONS, BRUSSELS : EPE ASSOCIATION, BE, 2001, pages 1-4, XP001052039 <br> ISBN: 90-75815-06-9 <br> * page 1; figure 1 * <br> *page 2, paragraph "THE POWER CONVERTER SIZING" * <br> ----- | 1-20 | |
| A,D | DE 103 30 473 A1 (ALSTOM TECHNOLOGY LTD BADEN [CH]) 27 January 2005 (2005-01-27) <br> * abstract * <br> * figure 3 * <br> ----- | 1-10 | TECHNICAL FIELDS SEARCHED (IPC) <br><br> H02M |

The present search report has been drawn up for all claims

| Place of search | Date of completion of the search | Examiner |
|---|---|---|
| The Hague | 1 March 2007 | MARANNINO, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 11 5873

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2007

| Patent document cited in search report | | Publication date | Patent family member(s) | | Publication date |
|---|---|---|---|---|---|
| EP 0220638 | A2 | 06-05-1987 | DE 3685190 D1 | | 11-06-1992 |
| | | | US 4816981 A | | 28-03-1989 |
| | | | US 4739464 A | | 19-04-1988 |
| DE 10330473 | A1 | 27-01-2005 | EP 1642383 A2 | | 05-04-2006 |
| | | | WO 2005004317 A2 | | 13-01-2005 |
| | | | US 2006214645 A1 | | 28-09-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5594636 A

- DE 10330473 A1